# EUROPEAN PATENT APPLICATION

(11) **EP 4 792 972 A1**
(43) Date of publication of application: **19.08.2026**
(21) Application number: 25220834.3
(22) Date of filing: 04.12.2025
(51) Int. Cl.: B23K 26/24, B23K 31/12

(54) **METHOD FOR PACKAGING SOLID-STATE LIDAR MODULE, AND SYSTEM FOR PACKAGING SOLID-STATE LIDAR MODULE**

(30) Priority: 17.02.2025 CN 202510168037
(71) Applicant: Shenzhen Xin Mao Xin Industrial Co., Ltd, Shenzhen, Guangdong 518000 (CN)
(72) Inventor: LIU, XINHUA, Shenzhen, 518000 (CN); LIU, QIUHUA, Shenzhen, 518000 (CN); ZHANG, HUAILIANG, Shenzhen, 518000 (CN); LIU, CHUNPING, Shenzhen, 518000 (CN)
(74) Representative: Metida

(57) **Abstract**

A method of packaging a solid-state LiDAR module includes: performing laser welding, based on historical output parameters, for packaging a front shell with a rear shell of the solid-state LiDAR module, collecting weld seam parameters; comparing flatness of the seam with standard flatness to determine whether any historical output parameter needs to be adjusted. When adjustment is needed, the welding speed is adjusted to obtain a final welding speed value. Multiple sampling points are set on the weld seam, and penetration depths and weld widths are collected and compared to a standard penetration range and a standard width range. It is determined, based on the comparison, whether to adjust the laser power. When needed, the laser power is adjusted based on a laser power adjustment coefficient, which is obtained based on standard deviations of the penetration depth and the weld width, and the number of non-compliant sampling points.

## Description

### CROSS REFERENCE TO RELATED APPLICATIONS

The present application claims the priority of the Chinese patent application No. 202510168037.3, filed on February 17, 2025, contents of which are incorporated herein by its entireties.

### TECHNICAL FIELD

Embodiments of the present disclosure relate to the technical field of laser welding, and more specifically, to a solid-state LiDAR module, a method for packaging a solid-state LiDAR module, and a system for packaging a solid-state LiDAR module.

### BACKGROUND

Solid-state LiDAR modules are widely used in autonomous driving, robot navigation, environmental monitoring, and other fields. Packaging quality of a solid-state LiDAR module directly impacts performance and reliability of the solid-state LiDAR module. Laser welding, as a high-precision and highly efficient welding technique, has been widely applied in packaging the solid-state LiDAR module. However, due to complexity of a welding process, variations in various welding parameters may affect welding quality, further impacting the performance of the solid-state LiDAR module. Therefore, ensuring stability in the parameters during welding to guarantee the welding quality has become a critical challenge in packing the solid-state LiDAR module.

Currently, most laser welding techniques in the art rely on fixed process parameters, such as a laser power and a welding speed. However, these parameters may be typically set based on historical experience, and may not be adjusted in real time according to practical welding conditions. A traditional welding process generally does not consider dynamic changes during welding, and therefore, quality issues due to material variations or process fluctuations cannot be addressed. Although setting standard parameters may enhance consistency in the welding quality, the set standard parameters do not achieve adjustment on the welding process based on real-time monitoring data. Therefore, problems, such as an insufficient penetration depth, an uneven weld width, or unstable welding, may occur to affect the final welding quality and the performance of the solid-state LiDAR module.

Therefore, a method and a system for packaging the solid-state LiDAR module need to be provided, so as to address the issue that most laser welding techniques rely on fixed process parameters set based on experience, lacking real-time adjustment capabilities. In this way, adaptation to material and process variations may be achieved, and the welding quality and the performance of the solid-state LiDAR module may be ensured.

### SUMMARY

The present disclosure provides a method for packaging a solid-state LiDAR module and a system for packaging a solid-state LiDAR module, so as to address the issue that most laser welding techniques rely on fixed process parameters set based on experience, lacking real-time adjustment capabilities. In this way, adaptation to material and process variations may be achieved, and the welding quality and the performance of the solid-state LiDAR module may be ensured.

In a first aspect, the present disclosure provides a method of packaging a solid-state LiDAR module, including:
Performing laser welding, based on historical output parameters, on a front shell and a rear shell of a solid-state LiDAR module for packaging, collecting weld seam parameters between the front shell and the rear shell after the packaging, wherein, the historical output parameters comprise a laser power and a welding speed; and the weld seam parameters comprise a penetration depth, a weld width, and an extent of flatness;
Comparing the extent of flatness with a predetermined standard extent of flatness to determine whether the historical output parameters need to be adjusted; in response to determining that any of the historical output parameters needs to be adjusted, adjusting the welding speed, based on a difference between the extent of flatness and the standard extent of flatness, so as to obtain a final welding speed value;
Setting a plurality of sampling points on the weld seam to collect the penetration depth and the weld width at each of the plurality of sampling points; comparing the penetration depth at each point with a predetermined standard penetration range to obtain a depth comparison result; comparing the weld width at each point with a predetermined standard width range to obtain a width comparison result; determining, based on the depth comparison result and the width comparison result, whether to adjust the laser power;
In response to determining that the laser power needs to be adjusted, calculating a standard deviation of the penetration depth and a standard deviation of the weld width; obtaining, based on the standard deviation of the penetration depth, the standard deviation of the weld width, and the number of non-compliant sampling points of the plurality of sampling points, a laser power adjustment coefficient; adjusting the laser power according to the laser power adjustment coefficient to obtain a final laser power value.

Furthermore, before the comparing the extent of flatness with a predetermined standard extent of flatness, the method further includes:
Obtaining external image information and internal image information of the weld seam, and determining whether any crack is formed in the external image information and the internal image information;
In response to determining that no crack is formed, determining that the extent of flatness is the standard extent of flatness;

In response to determining that at least one crack is formed, calculating a sum of lengths of all of the at least one crack and a sum of depths of all of the at least one crack, and calculating the extent of flatness based on a following formula:
$P = P 0 * a + P 0 * b ;$

In the above formula, the P denotes the extent of flatness, the P0 denotes the standard extent of flatness, the a denotes a weighting coefficient of the sum of lengths, and the b denotes a weighting coefficient of the sum of depths, each of the a and the b is in a range of [0, 0.5).

Furthermore, when comparing the extent of flatness with the predetermined standard extent of flatness to determine whether the historical output parameters need to be adjusted, the method includes:
In response to the extent of flatness being the standard extent of flatness, determining that no adjustment needs to be performed on any of the historical output parameters and setting the welding speed as the final welding speed value; and
In response to the extent of flatness being less than the standard extent of flatness, determining that adjustment needs to be performed on the historical output parameters.

Furthermore, when adjusting the welding speed, based on the difference between the extent of flatness and the standard extent of flatness, so as to obtain the final welding speed value, the method includes:
Setting a first difference and a second difference, wherein the first difference is less than the second difference;
In response to the difference being less than or equal to the first difference, determining that the welding speed is to be adjusted based on a first adjustment coefficient;
In response to the difference being greater than the first difference and less than the second difference, determining that the welding speed is to be adjusted based on a second adjustment coefficient; and
In response to the difference being greater than the second difference, determining that the welding speed is to be adjusted based on a third adjustment coefficient.

The first adjustment coefficient, the second adjustment coefficient, and the third adjustment coefficient are as follows: 1 > first adjustment coefficient > second adjustment coefficient > third adjustment coefficient > 0; and the final welding speed value is a product of the welding speed multiplied by a selected one of the first adjustment coefficient, the second adjustment coefficient, and the third adjustment coefficient.

Furthermore, when setting the plurality of sampling points on the weld seam to collect the penetration depth and the weld width at each of the plurality of sampling points, the method includes:
Uniformly setting the plurality of sampling points on the weld seam and sequentially numbering the plurality of sampling points;
Constructing a penetration depth sequence A = (S, S1, S2, S3, ..., Sn) based on the penetration depth of each of the plurality of sampling points; wherein the A denotes the penetration depth sequence, the S denotes the standard penetration depth range, and the Si denotes the penetration depth of a sampling point numbered i, where the i = 1, 2, 3, ..., n;
Constructing a weld width sequence B = (K, K1, K2, K3, ..., Kn) based on the weld width of each of the plurality of sampling points; wherein the B denotes the weld width sequence, the K denotes the standard weld width range, and the Ki denotes the weld width of a sampling point numbered i, and the i = 1, 2, 3, ..., n.

Furthermore, when determining, based on the depth comparison result and the width comparison result, whether to adjust the laser power, the method includes:
In response to the penetration depth of each of the plurality of sampling points being within the standard penetration depth range and the weld width of each of the plurality of sampling points being within the standard weld width range, determining that the laser power does not need to be adjusted; and
In response to the penetration depth of each of the plurality of sampling points being not within the standard penetration depth range and/or the weld width of each of the plurality of sampling points being not within the standard weld width range, determining that the laser power needs to be adjusted.

Furthermore, when obtaining, based on the standard deviation of the penetration depth, the standard deviation of the weld width, and the number of non-compliant sampling points of the plurality of sampling points, the laser power adjustment coefficient, the method includes:
Setting a first standard deviation and a second standard deviation, comparing the standard deviation of the penetration depth with the first standard deviation, and comparing the standard deviation of the weld width with the second standard deviation; and
Calculating a third difference between the standard deviation of the penetration depth and the first standard deviation, and calculating a fourth difference between the standard deviation of the weld width and the second standard deviation; and
Calculating the laser power adjustment coefficient based on the third difference, the fourth difference, and the number of non-compliant sampling points.

Each of the non-compliant sampling points is a point where the penetration depth is not within the standard penetration depth range and/or the weld width is not within the standard weld width range.

Furthermore, when calculating the laser power adjustment coefficient based on the third difference, the fourth difference, and the number of non-compliant sampling points, the method includes:
Calculating the laser power adjustment coefficient based on a following formula:
$T = \left(α*Δ1+β*Δ2\right) * \left[1+γ*\left(N1/N0\right)\right] ;$

The T denotes the adjustment coefficient, the Δ1 denotes the third difference, the Δ2 denotes the fourth difference, the N1 denotes the number of non-compliant sampling points, the N0 denotes a total number of the plurality of sampling points, and each of the α, the β, and the γ denotes an influence coefficient in a range of (0, 1].

Furthermore, when adjusting the laser power according to the laser power adjustment coefficient to obtain the final laser power value, the method includes:
when the third difference is less than 0 and the fourth difference is less than 0, α*△1 + β*△2 = 1.

The final laser power value being a product of the laser power multiplied by the adjustment coefficient.

Compared to the related art, in the present disclosure, the laser power and the welding speed may be dynamically adjusted, so as to enhance stability of the welding process and quality of a weld seam. Firstly, historical output parameters (such as the laser power and the welding speed) may be used to weld to package a front shell and a rear shell of the module, so as to maintain consistency and stability in the welding process. By collecting the weld seam parameters (the penetration depth, the weld width, and flatness) and comparing the weld seam parameters with standard values, the welding quality can be evaluated in real time. When a welding result deviates from the standard, the welding speed may be automatically adjusted to approach the predetermined quality. By setting sampling points and comparing the penetration depth and the weld width, it may be comprehensively determined whether the laser power needs to be adjusted, such that each weld seam meets corresponding dimensional requirements. In addition, in the present disclosure, a standard deviation of the penetration depth and a standard deviation of the weld width are calculated, a laser power adjustment coefficient may be determined based on the number of non-compliant sampling points. According to the above adjustment process, inconsistencies during welding may be effectively compensated, and the welding quality may be improved. Advantages of the method of the present disclosure may be that the welding parameters can be monitored and adjusted in real time, thereby reducing human intervention. Precise adjustments may be performed to reduce a rejection rate and a scrap rate, a production efficiency and product reliability may be improved. In summary, according to the method of the present disclosure,quality in packaging the solid-state LiDAR module may be achieved, and automation and intelligence in the production process may be improved.

In a second aspect, the present disclosure provides a system for packaging a solid-state LiDAR module, including the following.

A collection module is configured to collect the weld seam parameters between the front shell and the rear shell of the solid-state LiDAR module after performing the laser welding for packaging based on the historical output parameters; wherein, the historical output parameters comprise the laser power and the welding speed, and the weld seam parameters comprise the penetration depth, the weld width, and the extent of flatness.

A welding speed adjustment module is configured to: compare the extent of flatness with the predetermined standard extent of flatness to determine whether any of the historical output parameters needs to be adjusted; and in response to determining that any of the historical output parameters needs to be adjusted, adjust the welding speed based on the difference between the extent of flatness and the standard extent of flatness to obtain the final welding speed value.

A determination module is configured to: set the plurality of sampling points on the weld seam; collect the penetration depth and the weld width at each of the plurality of sampling points; compare the penetration depth at each of the plurality of sampling points with the predetermined standard penetration depth range to obtain the depth comparison result; compare the weld width at each of the plurality of sampling points with the predetermined standard weld width range to obtain the width comparison result; determine whether to adjust the laser power based on the depth comparison result and width comparison result.

A laser power adjustment module is configured to: calculate, in response to determining that the laser power needs to be adjusted, the standard deviation of the penetration depth and the standard deviation of the weld width of the weld seam; obtain, based on the standard deviation of the penetration depth, the standard deviation of the weld width, and the number of non-compliant sampling points, the laser power adjustment coefficient to obtain the final laser power value.

It is understood that advantages in the system for packaging the solid-state LiDAR module may be the same as that in the method for packaging the solid-state LiDAR module, which will not be repeated herein.

### BRIEF DESCRIPTION OF THE DRAWINGS

By reading detailed description of preferred embodiments below, various other advantages and benefits will be apparent to any ordinary skilled artisan. The drawings are used for illustrating the preferred embodiments and are not intended to limit the scope of the present disclosure. In all drawings, same reference numerals denote same elements.

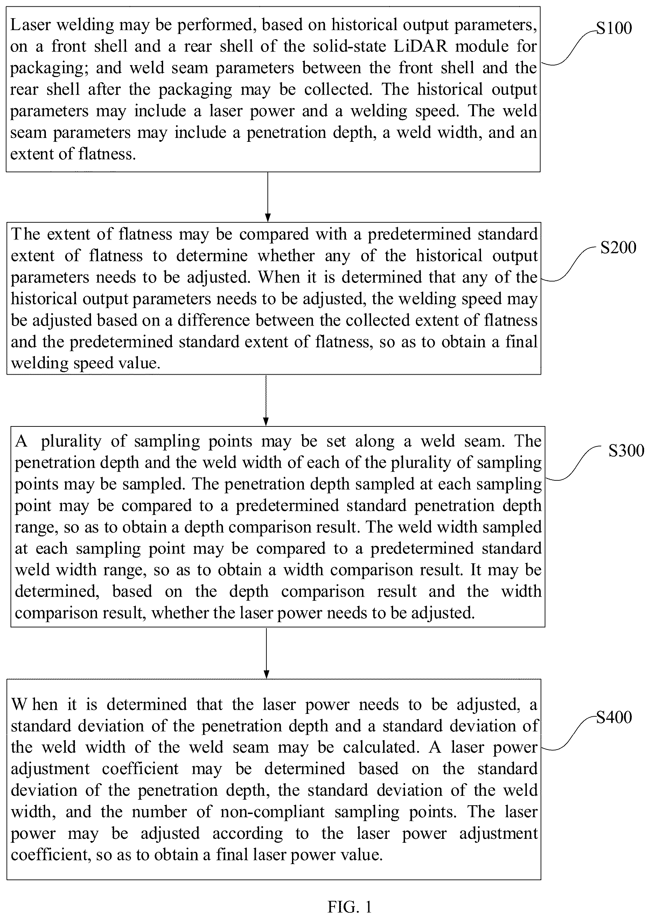

FIG. 1 is a flow chart of a method for packaging a solid-state LiDAR module according to an embodiment of the present disclosure.
FIG. 2 is a functional block diagram of a system for packaging the solid-state LiDAR module according to an embodiment of the present disclosure.

### DETAILED DESCRIPTIONS

Exemplary embodiments of the present disclosure will be described in more detail by referring to the accompanying drawings. Although the exemplary embodiments of the present disclosure are illustrated in the drawings, it shall be understood that the present disclosure may be embodied in various forms and shall not be limited by the embodiments described herein. Rather, these embodiments are provided to provide more thorough understanding of the present disclosure and to fully convey the scope of the present disclosure to any ordinary skilled artisan. It should be noted that, where non-conflicting, embodiments and features within the embodiments of the present disclosure may be combined with one another. The present disclosure will be described in detail by referring to the accompanying drawings and the embodiments.

In some embodiments of the present disclosure, as shown in FIG. a method for packaging a solid-state LiDAR module is provided and may include following blocks.

In a block S100, laser welding may be performed, based on historical output parameters, on a front shell and a rear shell of the solid-state LiDAR module for packaging; and weld seam parameters between the front shell and the rear shell after the packaging may be collected. The historical output parameters may include a laser power and a welding speed. The weld seam parameters may include a penetration depth, a weld width, and an extent of flatness.

In a block S200, the extent of flatness may be compared with a predetermined standard extent of flatness to determine whether any of the historical output parameters needs to be adjusted. When it is determined that any of the historical output parameters needs to be adjusted, the welding speed may be adjusted based on a difference between the collected extent of flatness and the predetermined standard extent of flatness, so as to obtain a final welding speed value.

In a block S300, a plurality of sampling points may be set along a weld seam. The penetration depth and the weld width of each of the plurality of sampling points may be sampled. The penetration depth sampled at each sampling point may be compared to a predetermined standard penetration depth range, so as to obtain a depth comparison result. The weld width sampled at each sampling point may be compared to a predetermined standard weld width range, so as to obtain a width comparison result. It may be determined, based on the depth comparison result and the width comparison result, whether the laser power needs to be adjusted.

In a block S400, when it is determined that the laser power needs to be adjusted, a standard deviation of the penetration depth and a standard deviation of the weld width of the weld seam may be calculated. A laser power adjustment coefficient may be determined based on the standard deviation of the penetration depth, the standard deviation of the weld width, and the number of non-compliant sampling points. The laser power may be adjusted according to the laser power adjustment coefficient, so as to obtain a final laser power value.

It should be understood that, according to the method for packaging the solid-state LiDAR module, the laser power and the welding speed may be dynamically adjusted to significantly enhance stability of a welding process and enhance weld quality of the weld seam. Firstly, the historical output parameters (such as the laser power and the welding speed) may be used to weld and package the front shell and the rear shell of the module, ensuring consistency and stability of the welding process. By collecting the parameters of the weld seam (the penetration depth, the weld width, and the extent of flatness) and comparing the parameters with standard values, the welding quality can be evaluated in real time. When a welding result deviates from the standard, the welding speed may be automatically adjusted to achieve the predetermined quality. By setting the sampling points and comparing the penetration depth and the weld width with respective standards, it may be comprehensively determined whether the laser power needs to be adjusted, such that it is ensured that each weld seam meets a stringent dimensional requirement. In addition, in the present disclosure, a standard deviation of the penetration depth and a standard deviation of the weld width are calculated, a laser power adjustment coefficient may be determined based on the number of non-compliant sampling points. According to the above adjustment process, inconsistencies during welding may be effectively compensated, and the welding quality may be improved. Advantages of the method of the present disclosure may be that the welding parameters can be monitored and adjusted in real time, eliminating human interference. Precise adjustments may be performed to reduce a rejection rate and a scrap rate, a production efficiency and product reliability may be improved. In summary, according to the method of the present disclosure, high quality in packaging the solid-state LiDAR module may be ensured, and automation and intelligence in the production process may be improved.

In some embodiments of the present disclosure, prior to comparing the extent of flatness with the predetermined standard extent of flatness, the method may include the following.

External image information and internal image information of the weld seam may be obtained, and it may be determined whether any crack exists in the external image information and the internal image information.

When it is determined that no crack exists, the extent of flatness may be determined as meeting the predetermined standard extent of flatness.

When it is determined that at least one crack exists, a total length and a total depth of all of the at least one crack may be calculated, and the extent of flatness may be calculated by using a following formula.
$P = P 0 * a + P 0 * b .$

In the above formula, the P denotes the extent of flatness, the P0 denotes the standard extent of flatness, the a denotes a weighting coefficient of the total length, and the b denotes a weighting coefficient of the total depth. Each of the a and the b may be in a range of [0, 0.5).

It is understood that, by detecting the crack in both the external image information and in the internal image information of the weld seam, a precise monitoring mechanism may be provided for ensuring packaging quality. Specifically, by determining whether any crack exists at the weld seam, a potential quality issue during the welding process may be effectively avoided. When no crack is formed at the weld seam, the extent of flatness may be determined as meeting the predetermined standard extent of flatness, such that processing may be simplified. When at least one crack is formed, the total length and the total depth of the at least one crack may be further calculated, and the extent of flatness may be then adjusted based on the predetermined formula. In this way, an impact caused by the crack may be quantified, welding process parameters may be dynamically adjusted based on severity of cracks. The formula ensures a targeted flatness adjustment and provides a quantitative assessment for the welding quality, such that the welding process may be optimized. Dynamically adjusting the extent of flatness may effectively prevent welding defects caused by cracks, such that overall performance and reliability of the solid-state LiDAR module may be improved. According to the above method, intelligent image recognition and crack detection may be applied, the welding process may be adjusted in real time based on practical conditions. Therefore, the welding quality may be improved, stability of the packaging may be improved, subsequent issues caused by welding defects may be reduced, a defect rate and a rework rate may be reduced, ensuring product consistency and high reliability.

In some embodiments of the present disclosure, the process of comparing the extent of flatness with the predetermined standard extent of flatness to determine whether any historical output parameter needs to be adjusted, may include the following.

When the extent of flatness meets the predetermined standard extent of flatness, it may be determined that no adjustment needs to be performed on the historical output parameters, and the welding speed may be determined as the final welding speed value.

When the extent of flatness is less than the predetermined standard extent of flatness, it may be determined that adjustment needs to be performed on the historical output parameters.

In some embodiments of the present disclosure, the process of adjusting the welding speed based on the difference between the extent of flatness and the predetermined standard extent of flatness to obtain the final welding speed value, may include the following.

A first difference value and a second difference value may be set, and the first difference value may be less than the second difference value.

When the difference is less than or equal to the first difference value, it may be determined that the welding speed may be adjusted based on a first adjustment coefficient.

When the difference is greater than the first difference value and less than the second difference value, it may be determined that the welding speed may be adjusted based on a second adjustment coefficient.

When the difference is greater than or equal to the second difference value, it may be determined that the welding speed may be adjusted based on a third adjustment coefficient.

Value ranges of the first adjustment coefficient, the second adjustment coefficient, and the third adjustment coefficient may meet the following: 1 > first adjustment coefficient > second adjustment coefficient > third adjustment coefficient > 0. The final welding speed may be equal to a product of the welding speed and the determined adjustment coefficient.

It should be understood, according to the process of adjusting the welding speed, an intelligent and precise dynamic adjustment mechanism may be provided based on the difference between the extent of flatness of the weld seam and the predetermined standard extent of flatness. When the extent of flatness of the weld seam meets the predetermined standard extent of flatness, the historical output parameters may not need to be adjusted, and the welding speed remains unchanged, such that unnecessary adjustment may be avoided, and an efficiency may be increased. When the extent of flatness is lower than the predetermined standard extent of flatness, various adjustment coefficients may be applied by calculating flatness deviation, and the welding speed may be flexibly adjusted, ensuring optimal welding quality. By setting the first difference value and the second difference value, an appropriate adjustment coefficient may be determined dynamically based on a magnitude of the flatness deviation. Such a tiered adjustment approach enables adjustment of the welding speed to be performed more finely. When the flatness deviation is small (the difference is less than the first difference value), a smaller adjustment coefficient may be applied; when the flatness deviation is large (the difference is greater than the second difference value), a larger adjustment coefficient may be applied. In this way, improvement in the welding quality may be ensured. The adjustment coefficient may decrease progressively from 1, such that the adjustment may be performed more flexibly, preventing adverse effects due to excessive adjustments. By performing the precise adjustment strategy, the welding speed may be controlled dynamically based on practical situations, stability of the welding process and the welding quality of the weld seam may be improved, defective products may be reduced, and the producing efficiency may be increased. In addition, by setting various adjustment coefficients for various flatness deviations, an adjustment magnitude may be effectively controlled, negative impacts due to overcorrection may be avoided, and precision and reliability of the welding process may be optimized.

In some embodiments of the present disclosure, the process of setting the plurality of sampling points at which the penetration depth and the weld width of each sampling point are collected, may include the following.

The plurality of sampling points may be set on the weld seam and may be sequentially numbered.

A penetration depth sequence A = (S, S1, S2, S3, ..., Sn) may be constructed based on the penetration depth at each sampling point, where the A denotes the penetration depth sequence, the S denotes the standard penetration depth range, and the Si denotes the penetration depth at the sampling point numbered i, and the i = 1, 2, 3, ..., n.

A weld width sequence B = (K, K1, K2, K3, ..., Kn) may be constructed based on the weld width at each sampling point, where the B denotes the weld width sequence, the K denotes the standard weld width range, and the Ki denotes the weld width at the sampling point numbered i, and the i = 1, 2, 3, ..., n.

It can be understood that, by setting the plurality of sampling points on the weld seam and collecting the penetration depth and the weld width at each sampling point, precise monitoring and evaluation of the welding quality may be achieved. Firstly, the plurality of sampling points may be uniformly set and numbered on the weld seam, so as to ensure systematic and comparable data collection. Subsequently, the penetration depth sequence A and the weld width sequence B may be constructed to provide intuitive representation of the penetration depth and the weld width at each sampling point. The standard penetration depth range S and the standard weld width range K serve as references. In this way, anomalies during the welding process may be rapidly identified. In the sequences, the Si and the Ki respectively denote the penetration depth and the weld width at the i-th sampling point. By comparing the Si and the Ki respectively with the standard range S and the standard range K, the welding quality at each sampling point may be evaluated. In this way, welding defects, such as insufficient penetration or uneven width, may be timely detected. Therefore, the welding process parameters may be optimized, consistency and reliability of the welding quality may be improved. Furthermore, by monitoring and recording the penetration depth and the weld width continuously during the welding, valuable data support may be provided for subsequent quality control and process improvement, such that continuous optimization of the welding process and enhancement of product quality may be achieved.

In some embodiments of the present disclosure, the process of determining whether to adjust the laser power based on the depth comparison result and the width comparison result, may include the following.

When the penetration depth at each sampling point is within the standard penetration depth range and the weld width at each sampling point is within the standard weld width range, it may be determined that the laser power does not need to be adjusted.

When the penetration depth at each sampling point is within the standard penetration depth range and/or the weld width at each sampling point is within the standard weld width range, it may be determined that the laser power may need to be adjusted.

In some embodiments of the present disclosure, the process of obtaining the laser power adjustment coefficient based on the standard deviation of the penetration depth, the standard deviation of the weld width, and the number of non-compliant sampling points, may include the following.

The first standard deviation and the second standard deviation may be set. The standard deviation of the penetration depth may be compared with the first standard deviation, and the standard deviation of the weld width may be compared with the second standard deviation.

A third difference between the standard deviation of the penetration depth and the first standard deviation may be calculated; and a fourth difference between the standard deviation of the weld width and the second standard deviation may be calculated.

The laser power adjustment coefficient may be determined based on the third difference, the fourth difference, and the number of non-compliant sampling points.

For each non-compliant sampling point, the penetration depth is not within the standard penetration depth range and/or the weld width is not within the standard weld width range.

It is understood that, by determining whether to adjust the laser power based on the depth comparison result and the width comparison result, precision and stability of the laser processing may be ensured. When the penetration depth and the weld width of all sampling points fall within the predetermined standard ranges, it may be determined that the laser power does not need to be adjusted, and therefore, current processing quality may be maintained, unnecessary power fluctuation may be avoided, such that a processing efficiency may be improved, and resource waste may be reduced. Conversely, when the penetration depth and the weld width of any sampling point exceed the standard ranges, it may be determined that the laser power needs to be adjusted, ensuring the processing quality to meet requirements. In this way, processing deviations may be timely corrected, and consistent quality of final products may be guaranteed. Furthermore, in some embodiments, the adjustment coefficient for the laser power may be obtained by calculating the standard deviation of the penetration depth, the standard deviation of the weld width, and the number of non-compliant sampling points. In this way, more precise control may be provided. By setting the first standard deviation and the second standard deviations as references and by comparing the standard deviations respectively with the standard deviations, fluctuation levels of the penetration depth and the weld width may be quantitatively assessed. Combined with the number of non-compliant sampling points, the processing quality may be more comprehensively evaluated, and an appropriate laser power adjustment coefficient may be calculated accordingly. The above data-based adjustment strategy may improve the adaptability and flexibility of the laser processing, reduce the scrap rate, and improve the overall production efficiency and the product quality.

In some embodiments of the present disclosure, the process of calculating the adjustment coefficient for the laser power based on the third difference, the fourth difference, and the number of non-compliant sampling points, may include the following.

The laser power adjustment coefficient may be determined using the following formula.
$T = \left(α*Δ1+β*Δ2\right) * \left[1+γ*\left(N1/N0\right)\right] .$

In the above formula, the T denotes the adjustment coefficient, the △1 denotes the third difference, the △2 denotes the fourth difference, the N1 denotes the number of non-compliant sampling points, the N0 denotes the total number of the sampling points, and each of the α, the β, and the γ denotes an influence coefficient and is in a range of (0, 1].

In some embodiments of the present disclosure, the process of adjusting the laser power based on the adjustment coefficient to obtain the final laser power value, may include the following.

When the third difference is less than 0 and the fourth difference is less than 0, α*△1 + β*△2 = 1.

The final laser power value may be the product of the laser power and the adjustment coefficient.

It should be understood that in some embodiments of the present disclosure, by calculating the laser power adjustment coefficient to optimize performance of a laser device, and significant advantages may be achieved. Firstly, by introducing the third difference and the fourth difference, self-adjustment may be achieved based on differences between practical laser output and expected laser output, such that laser precision and stability may be improved. Secondly, by considering a ratio of the number of non-compliant sampling points N1 to the total number of the sampling points N0, the laser power may be dynamically adjusted to accommodate various operating conditions and material properties, further enhancing quality and an efficiency of laser processing. In addition, by setting the influence coefficients α, β, and γ, the system may flexibly balance impacts of various factors on laser power adjustment, ensuring a rational and efficient adjustment process. When both the third difference and the fourth difference are less than zero, the specific adjustment strategy (α*△1 + β*△2 = 1) may be applied, ensuring the laser power adjustment to meet actual requirements without deviating excessively from original setting. In this way, potential device damage or processing errors may be prevented. At last, the adjustment coefficient T may be multiplied by a current laser power to obtain the final laser power value. In this way, the laser output may be ensured to remain at an optimal state, meeting demands of high-precision and high-efficiency industrial applications. In summary, the laser power adjustment process provided herein improves the precision and the efficiency of the laser processing and improves adaptability and stability of the system, possessing significant practical values and market potential.

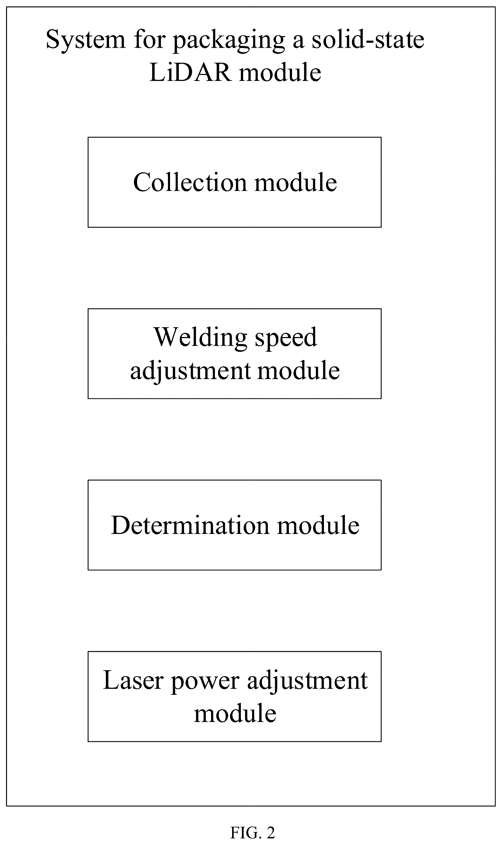

In another aspect, as shown in FIG. 2, the present disclosure provides a system for packaging the solid-state LiDAR module in which the above method for packaging the solid-state LiDAR module may be applied. The system may include the following.

A collection module may be configured to collect the weld seam parameters between the front shell and the rear shell of the solid-state LiDAR module after performing laser welding based on the historical output parameters on the front shell and the rear shell for packaging. The historical output parameters include the laser power and the welding speed, and the weld seam parameters include the penetration depth, the weld width, and the extent of flatness.

A welding speed adjustment module may be configured to: compare the extent of flatness with the predetermined standard extent of flatness to determine whether any of the historical output parameters needs to be adjusted; adjust, in response to determining that any of the historical output parameters needs to be adjusted, the welding speed based on the difference between the extent of flatness and the standard extent of flatness to obtain the final welding speed value.

A determination module may be configured to: set the plurality of sampling points on the weld seam; collect the penetration depth and the weld width at each sampling point; compare the penetration depth of each sampling point and the predetermined standard penetration depth range to obtain the depth comparison result; compare the weld width of each sampling point and the predetermined standard weld width range to obtain the width comparison result; comprehensively determine whether to adjust the laser power based on the depth comparison result and the width comparison result.

A laser power adjustment module may be configured to: calculate, in response to determining that the laser power needs to be adjusted, the standard deviation of the penetration depth and the standard deviation of the weld width; determine the laser power adjustment coefficient based on the standard deviation of the penetration depth, the standard deviation of the weld width, and the number of non-compliant sampling points; and adjust the laser power according to the adjustment coefficient to obtain the final laser power value.

It is understood that, by monitoring, by the collection module, the weld seam parameters after laser welding packaging in real time, preliminary assessment of the welding quality may be ensured. The historical output parameters, including the laser power and the welding speed, may be used in combination with the weld seam parameters, such as the penetration depth, the weld width, and the extent of flatness. In this way, crucial data support may be provided for subsequent quality control. Furthermore, the welding speed adjustment module may promptly identify and adjust the welding speed by comparing the extent of flatness with the standard extent of flatness, such that the extent of flatness of the weld seam may be guaranteed, such that overall product quality may be improved. The determination module may perform the setting to refine quality control. By setting the sampling points on the weld seam, the determination module compares the penetration depth and the weld width respectively to the standard penetration depth range and the standard weld width range, ensuring uniformity and consistency in the welding quality. At last, the laser power adjustment module may calculate the adjustment coefficient based on the standard deviation of the penetration depth, the standard deviation of the weld width, and the number of non-compliant sampling points. In this way, the laser power may be precisely adjusted, ensuring stability and reliability of the welding process. In summary, according to cooperation of various modules of the system, the quality of packaging the solid-state LiDAR module may be improved, the producing efficiency may be optimized, and the scrap rate may be reduced, achieving significant practical value and economic benefits.

Any ordinary skilled artisan shall appreciate that embodiments of the present disclosure may be provided as a method, a system, or a computer program product. Thus, the present disclosure may take a form of a fully hardware-based embodiment, a fully software-based embodiment, or an embodiment combining software and hardware aspects. Moreover, the present disclosure may take a form of a computer program product implemented on one or more computer-readable storage media (including but not limited to a disk storage, a CD-ROM, an optical storage, and so on) containing computer-executable program codes.

The present disclosure is described by referring to the flow chart and/or the block diagram illustrating the method, the device (system), and the computer program product according to embodiments of the present disclosure. It should be understood that each process and/or block in the flow chart and/or block diagram, as well as combination of processes and/or blocks therein, may be implemented by computer program instructions. These computer program instructions may be provided to a processor of a general-purpose computer, a dedicated computer, an embedded processor, or other programmable data processing device to produce a machine. The machine enables the instructions executed by the processor of the computer or other programmable data processing device to produce a device for performing the functions specified in one or more processes of the flow chart and/or one or more blocks of the block diagram.

These computer program instructions may alternatively be stored in a computer-readable storage medium capable of instructing a computer or other programmable data processing device to operate in a specific manner, such that the instructions stored in the computer-readable storage medium produce an article of manufacture including an instruction device that implements the functions specified in one or more processes of the flow chart and/or one or more blocks of the block diagram.

These computer program instructions may alternatively be loaded onto a computer or another programmable data processing device to execute a series of operational steps on the computer or the programmable device, so as to generate computer-implemented processing. The instructions executed on the computer or the programmable device provide steps for implementing the functions specified in one or more processes of the flow chart and/or one or more blocks of the block diagram.

Finally, it should be noted that the above embodiments are intended to illustrate, not to limit, the technical solutions of the present disclosure. Although the present disclosure is described in detail with reference to the above embodiments, any ordinary skilled artisan shall understand that modifications or equivalent replacements may still be made to the specific implementation methods of the present disclosure. Any modifications or equivalent replacements that do not depart from the spirit and scope of the present disclosure shall be included within the scope of the claims of the present disclosure.

## Claims

1. A method of packaging a solid-state LiDAR module, the method comprising:
performing laser welding, based on historical output parameters, on a front shell and a rear shell of a solid-state LiDAR module for packaging, collecting weld seam parameters between the front shell and the rear shell after the packaging, wherein, the historical output parameters comprise a laser power and a welding speed; and the weld seam parameters comprise a penetration depth, a weld width, and an extent of flatness;
comparing the extent of flatness with a predetermined standard extent of flatness to determine whether the historical output parameters need to be adjusted; in response to determining that any of the historical output parameters needs to be adjusted, adjusting the welding speed, based on a difference between the extent of flatness and the standard extent of flatness, so as to obtain a final welding speed value;
setting a plurality of sampling points on the weld seam to collect the penetration depth and the weld width at each of the plurality of sampling points; comparing the penetration depth at each point with a predetermined standard penetration range to obtain a depth comparison result; comparing the weld width at each point with a predetermined standard width range to obtain a width comparison result; determining, based on the depth comparison result and the width comparison result, whether to adjust the laser power;
in response to determining that the laser power needs to be adjusted, calculating a standard deviation of the penetration depth and a standard deviation of the weld width; obtaining, based on the standard deviation of the penetration depth, the standard deviation of the weld width, and the number of non-compliant sampling points of the plurality of sampling points, a laser power adjustment coefficient; adjusting the laser power according to the laser power adjustment coefficient to obtain a final laser power value;
wherein, before the comparing the extent of flatness with a predetermined standard extent of flatness, the method further comprises:
obtaining external image information and internal image information of the weld seam, and determining whether any crack is formed in the external image information and the internal image information;
in response to determining that no crack is formed, determining that the extent of flatness is the standard extent of flatness;
in response to determining that at least one crack is formed, calculating a sum of lengths of all of the at least one crack and a sum of depths of all of the at least one crack, and calculating the extent of flatness based on a following formula:
$P = P 0 * a + P 0 * b ;$
wherein, the P denotes the extent of flatness, the P0 denotes the standard extent of flatness, the a denotes a weighting coefficient of the sum of lengths, and the b denotes a weighting coefficient of the sum of depths, each of the a and the b is in a range of [0, 0.5).

2. The method according to claim 1, wherein, when comparing the extent of flatness with the predetermined standard extent of flatness to determine whether the historical output parameters need to be adjusted, the method comprises:
in response to the extent of flatness being the standard extent of flatness, determining that no adjustment needs to be performed on any of the historical output parameters and setting the welding speed as the final welding speed value;
in response to the extent of flatness being less than the standard extent of flatness, determining that adjustment needs to be performed on the historical output parameters.

3. The method according to claim 2, wherein, when adjusting the welding speed, based on the difference between the extent of flatness and the standard extent of flatness, so as to obtain the final welding speed value, the method comprises:
setting a first difference and a second difference, wherein the first difference is less than the second difference;
in response to the difference being less than or equal to the first difference, determining that the welding speed is to be adjusted based on a first adjustment coefficient;
in response to the difference being greater than the first difference and less than the second difference, determining that the welding speed is to be adjusted based on a second adjustment coefficient;
in response to the difference being greater than the second difference, determining that the welding speed is to be adjusted based on a third adjustment coefficient;
wherein, the first adjustment coefficient, the second adjustment coefficient, and the third adjustment coefficient are as follows: 1 > first adjustment coefficient > second adjustment coefficient > third adjustment coefficient > 0; and the final welding speed value is a product of the welding speed multiplied by a selected one of the first adjustment coefficient, the second adjustment coefficient, and the third adjustment coefficient.

4. The method according to claim 1, wherein, when setting the plurality of sampling points on the weld seam to collect the penetration depth and the weld width at each of the plurality of sampling points, the method comprises:
uniformly setting the plurality of sampling points on the weld seam and sequentially numbering the plurality of sampling points;
constructing a penetration depth sequence A = (S, S1, S2, S3, ..., Sn) based on the penetration depth of each of the plurality of sampling points; wherein the A denotes the penetration depth sequence, the S denotes the standard penetration depth range, and the Si denotes the penetration depth of a sampling point numbered i, where the i = 1, 2, 3, ..., n;
constructing a weld width sequence B = (K, K1, K2, K3, ..., Kn) based on the weld width of each of the plurality of sampling points; wherein the B denotes the weld width sequence, the K denotes the standard weld width range, and the Ki denotes the weld width of a sampling point numbered i, and the i = 1, 2, 3, ..., n.

5. The method according to claim 4, wherein, when determining, based on the depth comparison result and the width comparison result, whether to adjust the laser power, the method comprises:
in response to the penetration depth of each of the plurality of sampling points being within the standard penetration depth range and the weld width of each of the plurality of sampling points being within the standard weld width range, determining that the laser power does not need to be adjusted; and
in response to the penetration depth of each of the plurality of sampling points being not within the standard penetration depth range and/or the weld width of each of the plurality of sampling points being not within the standard weld width range, determining that the laser power needs to be adjusted.

6. The method according to claim 5, wherein, when obtaining, based on the standard deviation of the penetration depth, the standard deviation of the weld width, and the number of non-compliant sampling points of the plurality of sampling points, the laser power adjustment coefficient, the method comprises:
setting a first standard deviation and a second standard deviation, comparing the standard deviation of the penetration depth with the first standard deviation, and comparing the standard deviation of the weld width with the second standard deviation;
calculating a third difference between the standard deviation of the penetration depth and the first standard deviation, and calculating a fourth difference between the standard deviation of the weld width and the second standard deviation;
calculating the laser power adjustment coefficient based on the third difference, the fourth difference, and the number of non-compliant sampling points;
wherein, each of the non-compliant sampling points is a point where the penetration depth is not within the standard penetration depth range and/or the weld width is not within the standard weld width range.

7. The method according to claim 6, wherein, when calculating the laser power adjustment coefficient based on the third difference, the fourth difference, and the number of non-compliant sampling points, the method comprises:
calculating the laser power adjustment coefficient based on a following formula: $T = \left(α*Δ1+β*Δ2\right) * \left[1+γ*\left(N1/N0\right)\right] .$
wherein, the T denotes the adjustment coefficient, the Δ1 denotes the third difference, the Δ2 denotes the fourth difference, the N1 denotes the number of non-compliant sampling points, the N0 denotes a total number of the plurality of sampling points, and each of the α, the β, and the γ denotes an influence coefficient in a range of (0, 1].

8. The method according to claim 7, wherein, when adjusting the laser power according to the laser power adjustment coefficient to obtain the final laser power value, the method comprises:
when the third difference is less than 0 and the fourth difference is less than 0, α*△1 + β*△2 = 1; and
the final laser power value being a product of the laser power multiplied by the adjustment coefficient.

9. A system for packaging a solid-state LiDAR module, the system configured to perform the method of packaging the solid-state LiDAR module according to claim 1, wherein the system comprises:
a collection module, configured to collect the weld seam parameters between the front shell and the rear shell of the solid-state LiDAR module after performing the laser welding for packaging based on the historical output parameters; wherein, the historical output parameters comprise the laser power and the welding speed, and the weld seam parameters comprise the penetration depth, the weld width, and the extent of flatness;
a welding speed adjustment module, configured to: compare the extent of flatness with the predetermined standard extent of flatness to determine whether any of the historical output parameters needs to be adjusted; and in response to determining that any of the historical output parameters needs to be adjusted, adjust the welding speed based on the difference between the extent of flatness and the standard extent of flatness to obtain the final welding speed value;
a determination module, configured to: set the plurality of sampling points on the weld seam; collect the penetration depth and the weld width at each of the plurality of sampling points; compare the penetration depth at each of the plurality of sampling points with the predetermined standard penetration depth range to obtain the depth comparison result; compare the weld width at each of the plurality of sampling points with the predetermined standard weld width range to obtain the width comparison result; determine whether to adjust the laser power based on the depth comparison result and width comparison result; and
a laser power adjustment module, configured to: calculate, in response to determining that the laser power needs to be adjusted, the standard deviation of the penetration depth and the standard deviation of the weld width of the weld seam; obtain, based on the standard deviation of the penetration depth, the standard deviation of the weld width, and the number of non-compliant sampling points, the laser power adjustment coefficient to obtain the final laser power value.
